# EUROPEAN PATENT SPECIFICATION

(11) **EP 3 832 417 B1**
(45) Date of publication and mention of the grant of the patent: **27.11.2024**
(21) Application number: 19213909.5
(22) Date of filing: 05.12.2019
(51) Int. Cl.: G05B 23/02, G01R 19/165, G01R 31/00

(54) **METHOD FOR THE DETECTION OF A STATE OF A SYSTEM**
VERFAHREN ZUR DETEKTION EINES ZUSTANDS EINES SYSTEMS
PROCÉDÉ POUR LA DÉTECTION D'UN ÉTAT D'UN SYSTÈME

(43) Date of publication of application: 09.06.2021
(73) Proprietor: Elmos Semiconductor SE, 44227 Dortmund (DE)
(72) Inventor: SOTO, Angel Jose, 01309 Dresden (DE); FRIEDLER, Michael, 01259 Dresden (DE); WAGENKNECHT, Christian, 01219 Dresden (DE); NAUMANN, Ronny, 01689 Weinböhla (DE)
(74) Representative: dompatent von Kreisler Selting Werner - Partnerschaft von Patent- und Rechtsanwälten mbB

(56) References cited:
- EP-A1- 2 743 669
- EP-A1- 2 988 187
- EP-A1- 3 136 255
- EP-A1- 3 367 198
- US-A1- 2019 302 750
- CERRADA MARIELA ET AL: "A review on data-driven fault severity assessment in rolling bearings", MECHANICAL SYSTEMS AND SIGNAL PROCESSING, vol. 99, 19 June 2017 (2017-06-19) - 19 June 2017 (2017-06-19), pages 169 - 196, XP085152089, ISSN: 0888-3270, DOI: 10.1016/J.YMSSP.2017.06.012

## Description

The present invention relates to a method for the detection of a state of an electric system, especially for the detection of a faulty state or of an indication of a potentially upcoming faulty state of an electric system, wherein the electric system is controllable by means of one or a plurality of known electric control signals.

In many applications of diverse systems, it is important to diagnose the current state of the system. In this conjunction it is important to observe one or several parameters of the system with respect to potential deviations from expectancy ranges. Specifically, in multi-phase systems like electrical motors, motor controllers, multi-phase converters or even in electrical cars it is important to observe the state of the system with less system costs.

EP2743669A1 relates to detection of faults in various components of a drivetrain in an electromechanical machine.

Accordingly, an object of the present invention is to find a method for the detection of a state of a system, specifically of a system with one or more phases or load branches with controlling the phases or branches by modulated signals, wherein the efforts for providing hardware components for the system is reduced.

The above-mentioned object is solved according to the present invention by means of a method for the detection of a state of a system, especially for the detection of a faulty state or of an indication of a potentially upcoming faulty state of a system, wherein the system is controllable by means of one or a plurality of known control signals, the method comprising the steps as defined in claim 1. Individual embodiments of the present invention are the subject matter of the dependent claims.

According to the present invention, the temporal course of at least one value of at least one electric operating parameter of the electric system is detected. At least one section of the temporal course of the value or of at least a part of the values is transformed from time representation in the time domain into a transformed representation in a transformation domain which is different from the time representation in the time domain. Specifically, the transformation is performed from the time domain to the frequency domain by means of e.g. a spectral or wavelet representation or other frequency representation in the frequency domain. Accordingly, the value of the at least one electric operating parameter or at least a part of such a value or several values for several electric operating parameters of the electric system are transformed in the frequency domain.

In case of a fault-free operation of the system, the transformed value or values is/are within one or a plurality of expectancy ranges. By evaluating the current transformed values transformed in the frequency domain based on the temporal course of the value or values in the time domain, one can identify whether or not the current transformed value or values is/are within or outside of the one or plurality of expectancy ranges. Depending on the evaluation, a message can be provided that the system is in its fault-free state and/or that the system is in a faulty state or is in a state, which could become soon a faulty state of the system.

In the present invention, evaluating the current transformed value or values is performed by means of artificial intelligence, namely by means of a Hidden Markov Model. Depending on the evaluation, a corresponding message about the current state or about a potentially upcoming faulty state of the system is provided.

According to the embodiment of claim 2, based on the transformed values as well as based on the temporal course of the value or values and/or from at least one value derived from the transformed value or values and/or the temporal course of the value or values, which can be the deviation of the value or values and temporal course of the value or values in time of first or higher grade, a multi-dimensional feature vector signal is generated wherein in case of a fault-free operation, the curve or waveform of the temporal course of the multi-dimensional feature vector signal in a multi-dimensional space is within one or a plurality of expectancy ranges for permitted curves of the temporal course or temporal courses. The multi-dimensional space also includes the time as one of its dimensions.

Evaluating the curve of the current temporal course of the multi-dimensional feature vector signal is performed by means of a Hidden Markov Model.

The general concept of the present invention is that, by transferring the temporal course of an electric operating parameter of the system from the time domain into a transformed domain different from the time domain and specifically into the frequency domain, one can identify whether or not the system is fault-free or whether the system is in a faulty state or tends to come into a faulty state. How the corresponding evaluation of the transformed temporal course of the value of the operating parameter into the transformed domain is performed depends on the technique used therefor. All of these techniques have in common that based on the transformed values (whether they are based on transformed temporal course or based on a feature vector signal), it is determined whether or not the transformed value or values are within expected ranges.

One aspect of the invention is that an electric operational parameter of the electric system is determined and specifically the temporal course of the one or more parameters is determined. This determination can be performed by means of corresponding sensors or by observing specific features of the system from which the to be determined parameter can be derived. In other words, the temporal course of at least one value or at least one operating parameter of the system is provided in any suitable manner (e.g. by measuring it or by determining it in another manner). Thereafter, this temporal course of the value of the parameter or parameters is transformed from the time domain into a domain which is different from the time domain like e.g. the frequency domain. As "transformation" in the sense of the invention, also filtering, integrating, differentiating as known from methods of feature extraction has to be understood. Examples for those types of transformation in the sense of the present invention are:
- Fourier Transformation
- Hankel Transformation
- Hilbert Transformation
- Cosinus Transformation
- Short Term Fourier Transformation
- Laplace Transformation
- Mellin Transformation
- Sinus Transformation
- Radon Transformation
- Wavelet Transformation
- Two Stage Laplace Transformation
- Bluestein FFT Algorithmus
- Discrete Fourier Transformation (DFT)
- Discrete Cosinus Transformation (DCT)
- Discrete Sinus Transformation (DST)
- Fourier Transformation for time discrete Signals
- Modified Discrete Cosinus Transformation (MDCT)
- Fast Fourier Transformation (FFT)
- Discrete Hartley Transformation (DHT)
- Hadamard Transformation
- Fast Wavelet Transformation
- Wavelet-Packet Transformation
- Z Transformation

Thereafter, evaluation of the transformed signal takes place in order to be able to identify potential faulty states of the system. Finally, the faulty state or a potentially upcoming faulty state can be indicated optically, acoustically, or the like. Also, depending on the application, automatically the system or the central control of the system can be adjusted so as to automatically act against an upcoming faulty state or a faulty state by amending the control of the system.

Accordingly, the main object of the present invention is to identify failure or upcoming failure of a system, specifically of a multi-phase PWM system in one or more of its phases (load branches) with less system costs. According to a preferred variant of the present invention, deviations from an expected spectrum, e.g. by using FFT on a single shunt measurement with the need of additional circuitry, are observed. This application is for at least in part electrical systems, like e.g. heaters or motors.

The technique according to the invention can be used as a diagnostic feature in all multi-phase converters, e.g. motor controllers, heater applications, DC-DC converters from low voltage to ultrahigh voltage applications such as in electrical cars to reduce the total system costs by eliminating the need for many external components and specifically by eliminating the need to observe each of the multiple phases (load branches) of the system.

As already explained above at least in part, the system to be observed according to the present invention can be an electrical, mechanic, magnetic, pneumatic, hydraulic, fluidic, acoustic, optical, electromechanical, electromagnetic, electroacoustic, or electrooptical system. Specifically, such a system can be a MEMS (Micro Electromechanical or Electromagnetic System) or a MEOS (Micro Electrooptical System).

The one or more operating parameters are preferably electric current and/or electric voltage and/or the temperature and/or the brightness and/or pressure and/or force and/or velocity and/or acceleration and/or movement displacement and/or magnetic flux.

As also explained above, the present invention preferably can be used in multiphase systems, i.e. in systems which comprise several load branches (like e.g. resistive and/or inductive and/or capacitive loads) which branches are connected in parallel as star circuit wherein each load branch is operable by means of a control signal. In such a system preferably, an operating parameter is used which occurs in the connecting node of the star circuit of all the load branches.

Such multi-phase systems can be operated by means of control signals assigned to each of the load branches (phases). Preferably, the control signals are
- modulated signals which are modulated differently, and/or
- frequency signals of different frequencies, and/or
- phase shifted signals which are phase shifted relative to each other with the same or different relative phase shifts.

As an alternative to a system with a star circuit, the present invention can also be used in systems comprising several load branches which are connected in series as a ring or polygonal circuit.

As mentioned above, the transformed representation in the transformation domain preferably is a frequency spectrum, wherein the expectancy range comprises the parameters of the frequency spectrum such as frequency lines and the magnitude of these frequency lines.

Finally, it should be noted that according to the invention the system can be one or several of the following systems: a synchronous or asynchronous electric machine like a motor or a generator, a DC or AC electric machine, an unipolar or bipolar or multi-phase stepper motor with mechanical or electrical commutator, a BLDC motor, a linear motor, a reluctance motor, a heater, a multi-stage heater, DC-DC converter, multi-phase DC-DC converter, inverter, or multi-phase inverter. The present invention will be described in conjunction with an embodiment in which a multi-phases heater system is taken into consideration. An embodiment of the present invention is disclosed in the drawing in which
- Fig. 1: is a circuitry of a multi-phase system controlled by PWM control signals, wherein the sum of the currents of the individual phases is measured between the connection node of all the phases and ground,
- Fig. 2: is a representation of the phase-shifted PWM control signals used for controlling the system according to Fig. 1,
- Fig. 3: is a representation of the frequency spectrum for the fault-free state of the system of Fig. 1,
- Fig. 4: is a representation of the frequency spectrum in case that one or several phases are short cut,
- Fig. 5: is a representation of the frequency spectrum when one or more phases of the system are open,
- Fig. 6: shows two representations of the frequency spectrum in case that two adjacent phases and two non-adjacent phases are short cut, and
- Fig. 7: is a schematic block diagram of the main features of an embodiment of the present invention.

Commercial applications detect the failure of a system during its start-up operation by a special start sequence for each phase of the multi-phase of the system. On the other hand, for the detection during operation, there is the need for a dedicated measurement device(s) for each phase to measure e.g. current/voltage by e.g. multiple shunts.

Therefore, there is the necessity for detecting the failure and/or degradation of one or more phases of the multi-phase system in a running application especially in very high voltage applications such as heaters or motor drivers of electric cars including driving bridge faults.

The solution proposed for overcoming the insufficiencies in the prior art, in the present example is composed by
- measuring the electric current and, if necessary, converting it through an A/D converter in order to digitalize the feedback variable which is usually proportional to the output voltage or current of the converter,
- an FFT core to obtain the wide band spectrum of the feature variable, and
- a failure detection logic which evaluates the content of the spectrum looking for some special characteristics which are only present when there is a failure in one or more phases.

Such a procedure and concept allow to detect failure conditions on multi-phase systems (like e.g. multi-phase converters) to improve application and EMC performance without the need of expensive external circuitry.

This example of the invention preferably is based on digital signal processing techniques, knowledge of power electronics, and modulation techniques. However, the present invention is not limited to that.

The solution is an additional simple digital block which replaces many external components. It can be easily tested in production and easily imported to any integration process with digital standard cells available. The invention adds new technical features to control hardware and software products with only little additional design efforts.

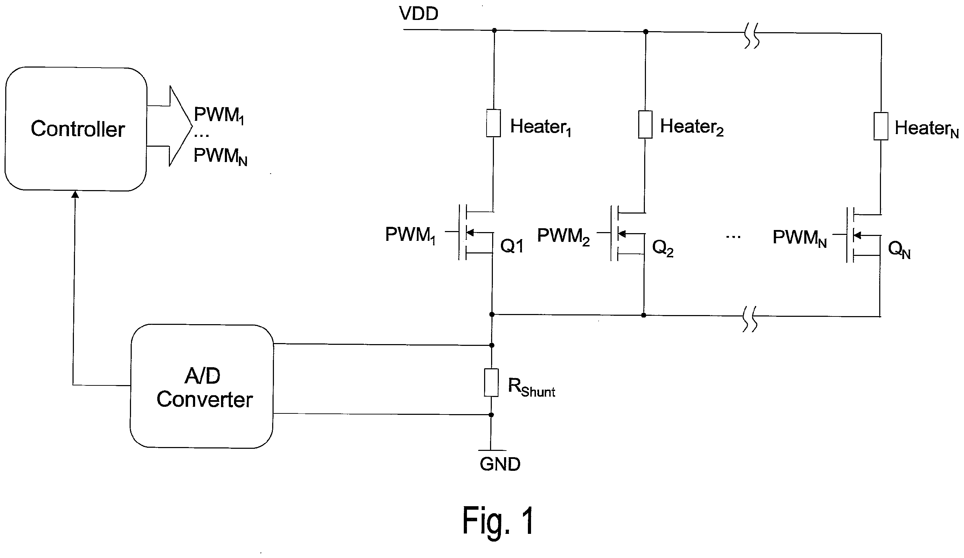

Usually an electric heater comprises several resistors (heaters) and switches to control their currents or the amount of heat they generate. The reason for providing load branches or phases (several resistors and switches) is to split the amount of power that each branch must handle. The usual topology can be seen in Fig. 1.

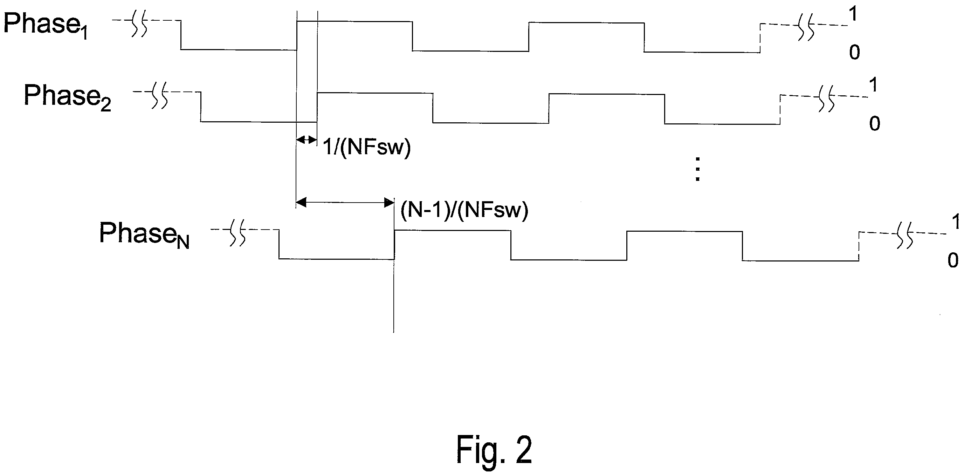

In order to improve the efficiency of the switches, they are driven with N PWM signals switching at frequency F_{sw}. To take advantage of the multiphase scheme, these PWM signals need to be phase-shifted in time between them with the shifts being 1/N of the period of F_{sw} each (Fig. 2). This improves the electromagnetic emission by reducing the current ripple at the voltage supply.

For control reasons, the resulting current needs to be measured. Since it is too complex and expensive to measure the current in each phase, all the phases are connected in parallel and the sum of the current (which is the current taken for the voltage supply) is measured as the voltage drop on a resistor R_{Shunt}. In addition, since the temperature is a "slow speed" variable, it cannot follow the ripple in current and for close loop control, usually only the average current value (low frequency value compared to F_{sw}) is used.

Since the current is not individually measured in each phase, a failure in one or more phases cannot be easily detected by the control loop. A failure in one (or more) phase can be
- an open circuit,
- short circuit in one phase,
- a short circuit between two phases, or
- a phase out of tolerance value for the heater and switch.

Since the control loop does not see the ripple in the voltage supply current, a failure in one or more phases will not be detected as such, and the control loop will change the duty cycle in order to compensate for the difference.

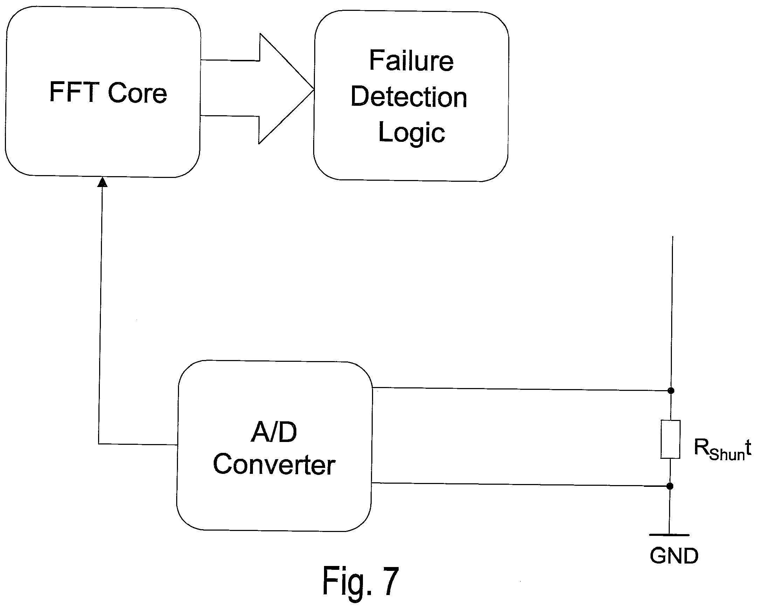

A spectrum analysis of the voltage drop across the shunt resistor is performed and then the harmonic content is evaluated. Since the modulation is known, it can be detected whether or not the harmonic content is as expected. In this embodiment, the spectrum is obtained using an FFT core (or a programmable tone detection core) and the Failure Detection Logic performs the analysis of the spectrum in order to detect unusual situations (Fig. 7).

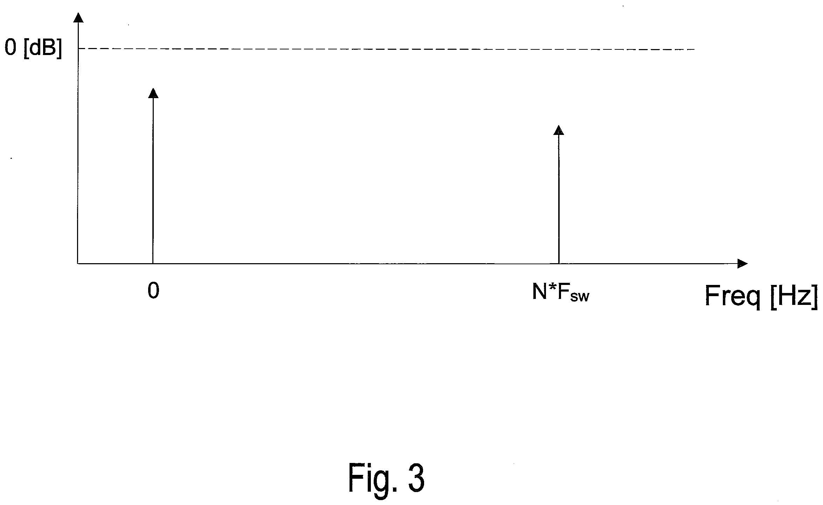

Fig. 3 shows the expected spectrum for the modulation in Fig. 2. As it can be seen, there is a tone at 0Hz corresponding to the DC (duty cycle) value of the resultant current. There is another tone at N*F_{sw} due to the modulation scheme. The amplitude of this last tone is inversely proportional to the amount of phases, but it can be easily found in the spectrum.

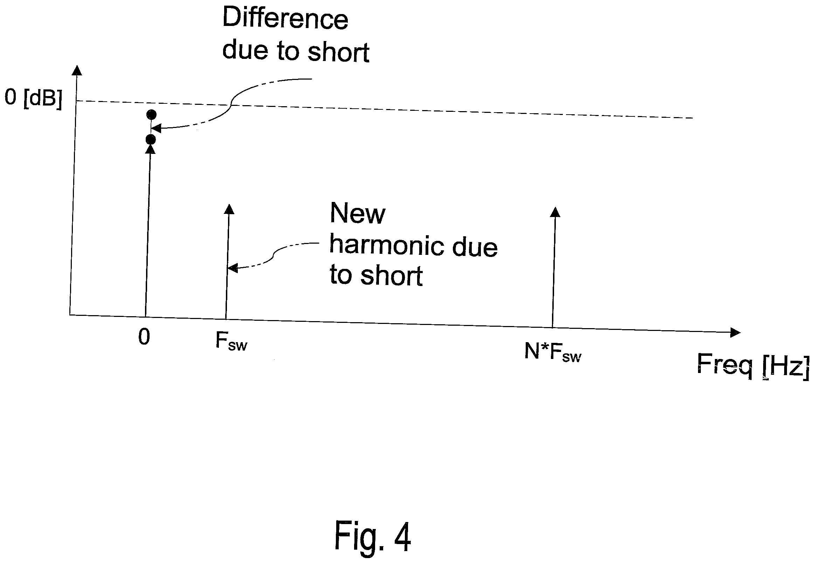

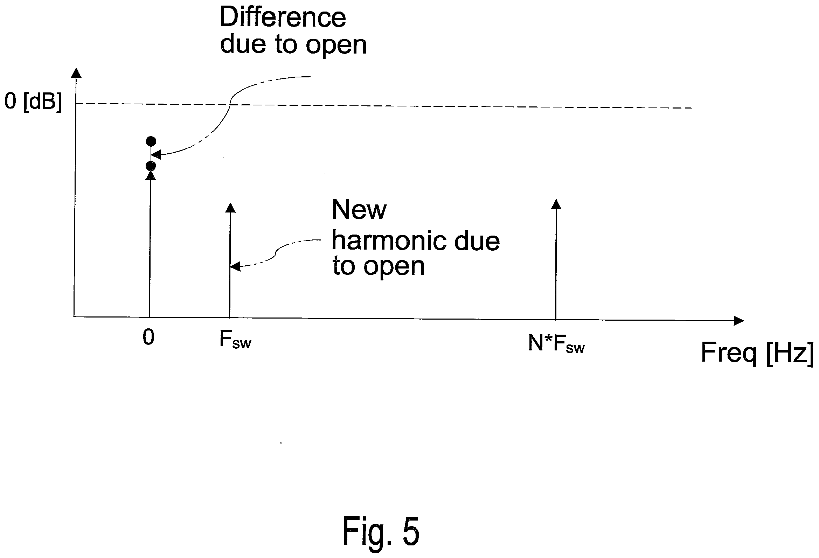

When one of the phases is shorted or opened, in the spectrum a tone (i.e. a frequency line) at F_{sw} will appear with an amplitude comparable to the one at N*F_{sw}. Depending on the value of the DC tone, it is possible to find if the phase opened or shorted. An example of a shorted phase is shown at Fig. 4 and for an open phase in Fig. 5.

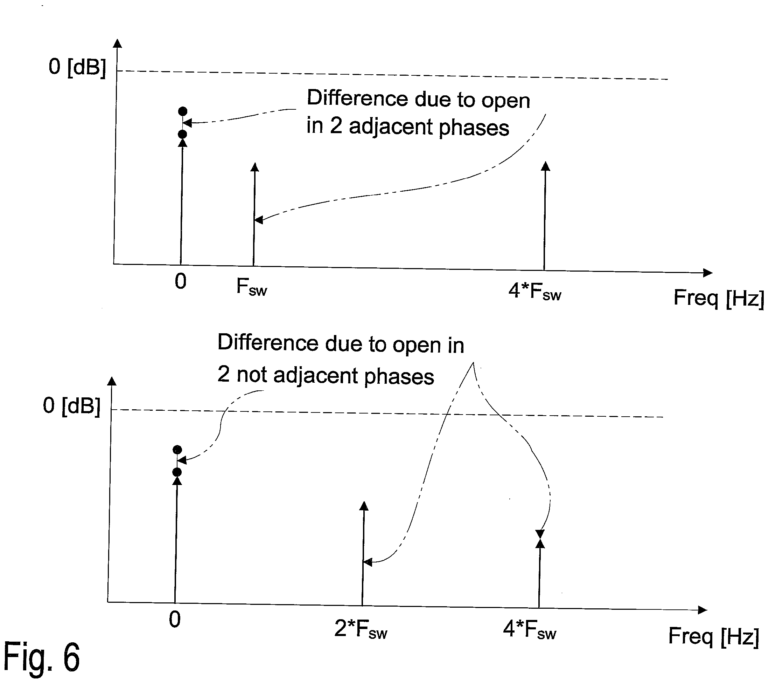

In case of more than one phase failure (open or short), depending on the position of the failing phases in the array, more tones will appear at multiples of F_{sw}. In some particular cases, the spectrum could look like the one generated by a circuit with less phases, for example instead 4 phases it may look like a 2 phases heater circuit (Fig. 6).

It could also happen that two phases are shorted between them. This particular situation can be interpreted as one open phase and another one with twice the expected amplitude. Harmonics are present at all frequencies which are multiples of F_{sw} and can be easily distinguish from a situation with no failures.

All these cases of failure can be found by inspection of the spectrum of the voltage drop across the shunt resistor. This principle can be extended to an N phases heater without any problem.

Failures that can be detected are:
- Opened Phases
- Shorted Phases
- Shorts between Phases

Additional optional features of the invention are listed herein:
- With additional threshold for the harmonics, a degradation of the phases can also be detected
- This technique can be used in all kind of interleaved power converter with N phases delayed between them 1/N
- It could be easy applied to Brushless Motor Drive application and DC-DC converters
- Short between phases detection
- Compare two signals from identical circuits instead of threshold as reference
- The ADC can be also a Comparator
- One can use this in all Interleaved Converter and three phases motor drivers.

## Claims

1. A method for the detection of a state of an electric system, especially for the detection of a faulty state or of an indication of a potentially upcoming faulty state of an electric system, wherein the electric system is controllable by means of one or a plurality of known electric control signals, the method comprising the following steps:
- detecting or providing the temporal course of at least one value of at least one electric operating parameter of the electric system,
- transforming at least one temporal section of the temporal course of the value or of at least a part of the values from the time representation in the time domain into a transformation representation in a transformation domain different from the time representation in the time domain, in particular into a spectral or wavelet representation or another frequency representation in a frequency domain as transformed values,
- wherein, in case of a fault-free operation, the transformed value or values is/are within one or a plurality of expectancy ranges,
- evaluating the current transformed value or values, and
- depending on the evaluation, providing a message that
- a faulty state or an indication of a potentially upcoming faulty state of the electric system is detected, or
- the electric system is in its fault-free state,
**characterized in that** the current transformed value or values are evaluated by means of a Hidden Markov Model.

2. The method of claim 1, wherein
- after the step of transforming at least one temporal section of the temporal course of the value or of at least a part of the values from the time representation in the time domain into a transformation representation in a transformation domain different from the time representation in the time domain, in particular into a spectral or wavelet representation or another frequency representation in a frequency domain as transformed values,
- an additional step is performed, namely generating a multi-dimensional feature vector signal from the transformed value or values and the temporal course of the value or values and from at least one value derived from the transformed value or values and/or the temporal course of the value or values, wherein a derived value can be the deviation in time of first grade and/or or a higher grade than the first grade,
- wherein, in case of a fault-free operation, the curve of the temporal course of the multi-dimensional feature vector signal in a multi-dimensional space, which includes the time as one of the dimensions, is within one or a plurality of expectancy ranges for permitted curves of the course, and
- evaluating the curve of the temporal course of the multi-dimensional feature vector signal by means of a Hidden Markov Model, and
- a faulty state or an indication of a potentially upcoming faulty state of the electric system is detected, or
- the electric system is in its fault-free state.

3. The method according to claim 1 or 2, characterized that the step of transforming comprises performing a wavelet transformation.

4. The method according to any of one of claims 1 to 3, wherein the operating parameter or parameters is/are an electric current and/or an electric voltage.

5. The method according to any one of claims 1 to 4, wherein the electric system comprises several electric load branches which are connected in parallel as star circuit wherein each electric load branch is operable by means of an electric control signal.

6. The method according to claim 4 or 5, wherein the electric operating parameter is an electric parameter occurring in a connecting node of the star circuitry of all the load branches.

7. The method according to claim 5 or 6, wherein the electric control signals are
- modulated signals which are modulated differently, and/or
- frequency signals of different frequencies, and/or
- phase shifted signals which are phase shifted relative to each other with the same or different relative phase shifts.

8. The method according to any one of claims 1 to 4, wherein the electric system comprises several load branches which are connected in series as a ring or polygonal circuit.

9. The method according to any one of claims 1 to 8, wherein the expectancy range comprises the parameters of a frequency spectrum such as frequency lines and the magnitude of these frequency lines.

10. The method according to any one of claims 1 to 9, wherein the electric system is a synchronous or asynchronous electric machine like a motor or a generator, a DC or AC electric machine, an unipolar or bipolar or multi-phase stepper motor with mechanical or electrical commutator, a BLDC motor, a linear motor, a reluctance motor, a heater, a multi-stage heater, DC-DC converter, multi-phase DC-DC converter, inverter, or multi-phase inverter.

## Patentansprüche

1. Verfahren zur Detektion eines Zustands eines elektrischen Systems, insbesondere zur Detektion eines fehlerhaften Zustands oder eines Hinweises auf einen potenziell bevorstehenden fehlerhaften Zustand eines elektrischen Systems, wobei das elektrische System mittels eines oder einer Vielzahl von bekannten elektrischen Steuersignalen steuerbar ist, wobei das Verfahren die folgenden Schritte umfasst:
- Detektieren oder Bereitstellen des zeitlichen Verlaufs von mindestens einem Wert von mindestens einem elektrischen Betriebsparameter des elektrischen Systems,
- Transformieren von mindestens einem zeitlichen Abschnitt des zeitlichen Verlaufs des Werts oder von mindestens einem Teil der Werte aus der Zeitdarstellung in dem Zeitbereich in eine Transformationsdarstellung in einem Transformationsbereich, die sich von der Zeitdarstellung im Zeitbereich unterscheidet, insbesondere in eine spektrale Darstellung oder Wavelet-Darstellung oder eine andere Frequenzdarstellung in einem Frequenzbereich als transformierte Werte,
- wobei im Falle eines fehlerfreien Betriebs der/die transformierte/n Wert/e innerhalb eines oder einer Vielzahl von Erwartungsbereichen liegt/liegen,
- Auswerten des/der aktuellen transformierten Werts/Werte, und
- in Abhängigkeit von der Auswertung, Übermitteln einer Nachricht, dass
- ein fehlerhafter Zustand und ein Hinweis auf einen potenziell bevorstehenden fehlerhaften Zustand des elektrischen Systems detektiert wird, oder
- das elektrische System in einem fehlerfreien Zustand ist,
**dadurch gekennzeichnet, dass** der/die aktuelle/n transformierte/n Wert/e mittels eines Hidden Markov Models ausgewertet werden.

2. Verfahren nach Anspruch 1, wobei
- nach dem Schritt des Transformierens von mindestens einem zeitlichen Abschnitt des zeitlichen Verlaufs des Werts oder von mindestens einem Teil der Werte aus der Zeitdarstellung in dem Zeitbereich in eine Transformationsdarstellung in einem Transformationsbereich, die sich von der Zeitdarstellung im Zeitbereich unterscheidet, insbesondere in eine spektrale Darstellung oder Wavelet-Darstellung oder eine andere Frequenzdarstellung in einem Frequenzbereich als transformierte Werte
- ein zusätzlicher Schritt durchgeführt wird, und zwar das Erzeugen eines mehrdimensionalen Merkmalsvektorsignals aus dem/den transformierten Wert/en und dem zeitlichen Verlauf des Werts oder der Werte und aus mindestens einem Wert, der aus dem/den transformierten Wert/en und/oder dem zeitlichen Verlauf des Werts oder der Werte abgeleitet wird, wobei ein abgeleiteter Wert die Zeitabweichung ersten Grades und/oder eines höheren Grades als der erste Grad sein kann,
- wobei im Falle eines fehlerfreien Betriebs die Kurve des zeitlichen Verlaufs des mehrdimensionalen Merkmalsvektorsignals in einem mehrdimensionalen Raum, der die Zeit als eine der Dimensionen umfasst, innerhalb eines oder einer Vielzahl von Erwartungsbereichen für zugelassene Kurven des Verlaufs liegt, und
- Auswerten der Kurve des zeitlichen Verlaufs des mehrdimensionalen Merkmalsvektorsignals mittels eines Hidden Markov Modells, und
- wobei ein fehlerhafter Zustand oder ein Hinweis auf einen potenziell bevorstehenden fehlerhaften Zustand des elektrischen Systems detektiert wird, oder
- wobei das elektrische System in einem fehlerfreien Zustand ist.

3. Verfahren nach Anspruch 1 oder 2, **dadurch gekennzeichnet, dass** der Schritt des Transformierens das Durchführen einer Wavelet-Transformation umfasst.

4. Verfahren nach einem der Ansprüche 1 bis 3, wobei der/die Betriebsparameter ein elektrischer Strom und/oder eine elektrische Spannung ist/sind.

5. Verfahren nach einem der Ansprüche 1 bis 4, wobei das elektrische System mehrere elektrische Lastzweige aufweist, die als Sternschaltung parallel geschaltet sind, wobei jeder elektrische Lastzweig mittels eines elektrischen Steuersignals betätigbar ist.

6. Verfahren nach Anspruch 4 oder 5, wobei der elektrische Betriebsparameter ein elektrischer Parameter ist, der in einem Verbindungsknoten der Sternverschaltung sämtlicher Lastzweige auftritt.

7. Verfahren nach Anspruch 5 oder 6, wobei die elektrischen Steuersignale
- modulierte Signale sind, die unterschiedlich moduliert sind, und/oder
- Frequenzsignale unterschiedlicher Frequenzen sind, und/oder
- phasenverschobene Signale, die relativ zueinander phasenverschoben sind, mit denselben oder unterschiedlichen relativen Phasenverschiebungen sind.

8. Verfahren nach einem der Ansprüche 1 bis 4, wobei das elektrische System mehrere Lastzweige aufweist, die als eine Ring- oder Polygonschaltung in Reihe geschaltet sind.

9. Verfahren nach einem der Ansprüche 1 bis 8, wobei der Erwartungsbereich die Parameter eines Frequenzspektrums umfasst, wie beispielsweise Frequenzlinien und die Größenordnung dieser Frequenzlinien.

10. Verfahren nach einem der Ansprüche 1 bis 9, wobei das elektrische System eine synchrone oder asynchrone elektrische Maschine ist, wie z. B. ein Motor oder ein Generator, eine elektrische Gleichstrom- oder Wechselstrommaschine, ein unipolarer oder bipolarer oder mehrphasiger Schrittmotor mit mechanischem oder elektrischem Kommutator, ein BLDC-Motor, ein Linearmotor, ein Reluktanzmotor, ein Heizer, ein mehrstufiger Heizer, ein Gleichspannungswandler, ein mehrphasiger Gleichspannungswandler, ein Wechselrichter, oder ein mehrphasiger Wechselrichter.

## Revendications

1. Procédé destiné à la détection d'un état d'un système électrique, destiné spécialement à la détection d'un état fautif ou d'une indication d'un état fautif potentiellement à venir d'un système électrique, dans lequel le système électrique peut être commandé au moyen d'un ou d'une pluralité de signaux de commande électriques connus, le procédé comprenant les étapes suivantes :
- détection ou fourniture de l'évolution temporelle d'au moins une valeur d'au moins un paramètre fonctionnel électrique du système électrique,
- transformation d'au moins une section temporelle de l'évolution temporelle de la valeur ou d'au moins une partie des valeurs de la représentation temporelle dans le domaine temporel en une représentation de transformation dans un domaine de transformation, différente de la représentation temporelle dans le domaine temporel, en particulier en une représentation spectrale ou en ondelettes ou une autre représentation fréquentielle dans un domaine fréquentiel en tant que valeurs transformées,
- dans lequel, en cas de fonctionnement sans faute, la valeur ou les valeurs transformée(s) est/sont à l'intérieur d'une ou d'une pluralité de plages de valeurs escomptées,
- l'évaluation de la valeur ou des valeurs transformée(s) actuelle(s),
et
- en fonction de l'évaluation, la fourniture d'un message selon lequel
- un état fautif ou une indication d'un état fautif potentiellement à venir du système électrique est détecté, ou
- le système électrique est dans son état sans faute,
**caractérisé en ce que** la valeur ou les valeurs transformée(s) actuelle(s) sont évaluées au moyen d'un modèle de Markov caché.

2. Procédé selon la revendication 1, dans lequel
- après l'étape de transformation d'au moins une section temporelle de l'évolution temporelle de la valeur ou d'au moins une partie des valeurs de la représentation temporelle dans le domaine temporel en une représentation de transformation dans un domaine de transformation, différente de la représentation temporelle dans le domaine temporel, en particulier en une représentation spectrale ou en ondelettes ou une autre représentation fréquentielle dans un domaine fréquentiel en tant que valeurs transformées,
- une étape supplémentaire est mise en oeuvre, à savoir la génération d'un signal vectoriel caractéristique multidimensionnel à partir de la valeur ou des valeurs transformée(s) et de l'évolution temporelle de la valeur ou des valeurs et à partir d'au moins une valeur dérivée de la valeur ou des valeurs transformée(s) et/ou de l'évolution temporelle de la valeur ou des valeurs, dans lequel une valeur dérivée peut être la déviation dans le temps de premier grade et/ou d'un grade plus élevé que le premier grade,
- dans lequel, en cas de fonctionnement sans faute, la courbe de l'évolution temporelle du signal vectoriel caractéristique multidimensionnel dans un espace multidimensionnel, qui comporte le temps en guise d'une des dimensions, est à l'intérieur d'une ou d'une pluralité de plages de valeurs escomptées pour des courbes permises de l'évolution, et
- l'évaluation de la courbe de l'évolution temporelle du signal vectoriel caractéristique multidimensionnel au moyen d'un modèle de Markov caché, et
- un état fautif ou une indication d'un état fautif potentiellement à venir du système électrique est détecté, ou
- le système électrique est dans son état sans faute.

3. Procédé selon la revendication 1 ou 2, **caractérisé en ce que** l'étape de transformation comprend la mise en oeuvre d'une transformation en ondelettes.

4. Procédé selon l'une quelconque des revendications 1 à 3, dans lequel le paramètre ou les paramètres fonctionnel(s) est/sont un courant électrique et/ou une tension électrique.

5. Procédé selon l'une quelconque des revendications 1 à 4, dans lequel le système électrique comprend plusieurs branches de charge électrique qui sont connectées en parallèle en tant que circuit en étoile dans lequel chaque branche de charge électrique est fonctionnelle au moyen d'un signal de commande électrique.

6. Procédé selon la revendication 4 ou 5, dans lequel le paramètre fonctionnel électrique est un paramètre électrique se produisant dans un noeud de connexion du système de circuit en étoile de toutes les branches de charge.

7. Procédé selon la revendication 5 ou 6, dans lequel les signaux de commande électriques sont
- des signaux modulés qui sont modulés différemment, et/ou
- des signaux de fréquence de fréquences différentes, et/ou
- des signaux déphasés qui sont déphasés les uns par rapport aux autres avec des déphasages relatifs identiques ou différents.

8. Procédé selon l'une quelconque des revendications 1 à 4, dans lequel le système électrique comprend plusieurs branches de charge qui sont connectées en série en tant que circuit en anneau ou polygonal.

9. Procédé selon l'une quelconque des revendications 1 à 8, dans lequel la plage de valeurs escomptées comprend les paramètres d'un spectre de fréquences tels que des lignes de fréquence et l'ordre de grandeur de ces lignes de fréquence.

10. Procédé selon l'une quelconque des revendications 1 à 9, dans lequel le système électrique est une machine électrique synchrone ou asynchrone de type moteur ou générateur, une machine électrique CC ou CA, un moteur pas à pas unipolaire, bipolaire ou multiphasé avec commutateur mécanique ou électrique, un moteur BLDC, un moteur linéaire, un moteur à réluctance, un dispositif de chauffage, un dispositif de chauffage à plusieurs étages, un convertisseur CC-CC, un convertisseur CC-CC multiphasé, un onduleur, ou un onduleur multiphasé.
